# EUROPEAN PATENT APPLICATION

(11) **EP 1 424 837 A1**
(43) Date of publication of application: **02.06.2004**
(21) Application number: 03027396.5
(22) Date of filing: 27.11.2003
(51) Int. Cl.: H04M 1/02, G06F 1/16, H04M 1/23

(54) **Portable communication apparatus having data input expandability**

(30) Priority: 27.11.2002 KR 2002074514
(71) Applicant: SAMSUNG ELECTRONICS CO. LTD., Suwon-city, Kyounggi-do 441-742 (KR)
(72) Inventor: Park, In-Gon, Paldal-gu Suwon-city Kyungki-do (KR); Park, Seung-Min, Paldal-gu Suwon-city Kyungki-do (KR); Hyun, Sang-Min, Paldal-gu Suwon-city Kyungki-do (KR); Kim, Sung-Kwon, Paldal-gu Suwon-city Kyungki-do (KR); Lee, Ji-Young, Paldal-gu Suwon-city Kyungki-do (KR); Im, Jung-Hyeok, Paldal-gu Suwon-city Kyungki-do (KR); Shigeri, Mitsuhiro, Paldal-gu Suwon-city Kyungki-do (KR)
(74) Representative: Grünecker, Kinkeldey, Stockmair & Schwanhäusser Anwaltssozietät

(57) **Abstract**

Disclosed is a portable communication apparatus capable of providing data input expandability and thus convenient usability. The portable communication apparatus includes a main housing (10), a hinge axis extending across the main housing, a fixed housing fixed (20) to a first peripheral portion of the main housing, the first peripheral portion being located at one side of the hinge axis, and a rotational housing (30) rotatable about the hinge axis, the rotational housing being in contact with the fixed housing while surrounding the first peripheral portion of the main housing when the rotational housing is closed on the fixed housing, the rotational housing being most distant from the fixed housing while surrounding a second peripheral portion of the main housing when the rotational housing is completely opened from the fixed housing.

## Description

The present invention relates to a portable communication apparatus, such as, a cellular phone, a personal digital assistant (PDA), a hand held phone (HHP), and more particularly to a portable communication apparatus providing data input expandability and thus convenient usability.

In general, a "portable communication apparatus" refers to an apparatus using which any user can communicate with a counterpart user through wireless means, while carrying such portable communication apparatus. The trends in construction of the portable communication apparatuses have followed a tendency not only toward compactness and light-weight, but also toward functional variability. Thus, a future portable communication apparatus will be used in compact, light-weight, multi-functional and multi-lateral applications, and will be directed or oriented to various multi-media or Internet environments.

A generalized conventional portable communication apparatus is classified into various types based on its geometry. For example, a wireless terminal is classified into a bar-type, a flip-type or a folder-type in accordance with its geometrical appearance. The bar-type wireless terminal means that a single housing is constructed in a bar shape. The flip-type wireless terminal means that a cover or flip is pivotally connected to a single bar-shaped housing by a hinge device. The folder-type wireless terminal means that a folder is pivotally coupled to a single bar-shaped housing by a hinge device to allow the folder to be folded.

The portable wireless terminal may be classified into a neck wearable type and a wrist wearable type according to a physical wearable position or the way the user may carry the device. The neck wearable type wireless terminal is a type of the terminal, which a user wears around the neck using a string, while the wrist wearable type wireless terminal means a type of terminal, which a user wears around the wrist.

Furthermore, the wireless terminal may be classified into a rotation-type and a sliding-type based on an open/close manner of readying the terminal for use. The rotation-type wireless terminal means a type in which two housings are coupled to each other in a manner in which one housing can rotate about the other to be opened or closed. The sliding-type wireless terminal means a type in which two housings are coupled to each other in a manner in which one housing can slide on top of the other to be opened or closed. These foregoing classifications of wireless terminals are easily understood by those skilled in the art.

A conventional communication apparatuses classified based on their geometrical appearance, the flip-type portable communication apparatus and its hinge device are disclosed in detail in commonly assigned U.S. Patent No. 6,470,175, titled "FLIP-UP TYPE PORTABLE PHONE AND HINGE MECHANISM THEREOF".

There exists a common problem with the above-listed conventional portable communication apparatuses, in that it is inconvenient for the users to input complicated data, because the number of keys which are arranged on the terminal is constricted. To solve this problem and to positively cope with various Internet environments, the conventional portable communication apparatuses may have an increased number of keys. In this case, if the number of keys is excessively increased, these apparatuses encounter another problem in that their compact tendencies deteriorate.

Even the portable terminal disclosed in U.S. Patent No. 6,470,175 has a problem accompanying a space restraint to provide data input expandability. In that patent, the flip-up type portable terminal is provided with about 15 to 20 keys for voice communication alone. This incurs no inconvenience to perform voice communication with a counterpart. However, a portable terminal, such as a PDA, in which 20 or more keys are present, leads to a restriction on an arrangement space of its main housing.

It is the object of the present invention to provide a portable communication apparatus capable of positively coping with a multimedia environment.

This object is solved by the subject matters of the independent claims.

Preferred embodiments are defined in the dependent claims.

It is an aspect of the present invention to provide a portable communication apparatus capable of providing data input expandability and thus convenient usability.

To accomplish the above, there is provided a portable communication apparatus comprising: a main housing; a hinge axis extending across the main housing; a fixed housing fixed to a first peripheral portion of the main housing, the first peripheral portion being located at one side of the hinge axis; and a rotational housing rotatable about the hinge axis, the rotational housing being in contact with the fixed housing while surrounding the first peripheral portion of the main housing when the rotational housing is closed on the fixed housing, the rotational housing being most distant from the fixed housing while surrounding a second peripheral portion of the main housing when the rotational housing is completely opened from the fixed housing.

The above features and advantages of the present invention will be more apparent from the following detailed description taken in conjunction with the accompanying drawings, in which:
FIG. 1 is a perspective view of a portable communication apparatus according to a preferred embodiment of the present invention, in which, in a phone operation mode, a rotational housing is closed;
FIG. 2 is a front view of the portable communication apparatus shown in FIG. 1;
FIG. 3 is a perspective view of a portable communication apparatus according to a preferred embodiment of the present invention, in which, in a personal digital assistant (PDA) operation mode, a rotational housing is completely opened;
FIG. 4 is a front view of the portable communication apparatus shown in FIG. 3;
FIG. 5 is a side view of the portable communication apparatus shown in FIG. 3; and
FIG. 6 is a bottom view of a portable communication apparatus according to a preferred embodiment of the present invention.

Hereinafter, preferred embodiments of the present invention will be described in detail with reference to the accompanying drawings. In the following description of the present invention, a detailed description of known functions and configurations incorporated herein will be omitted when it may make the subject matter of the present invention rather unclear.

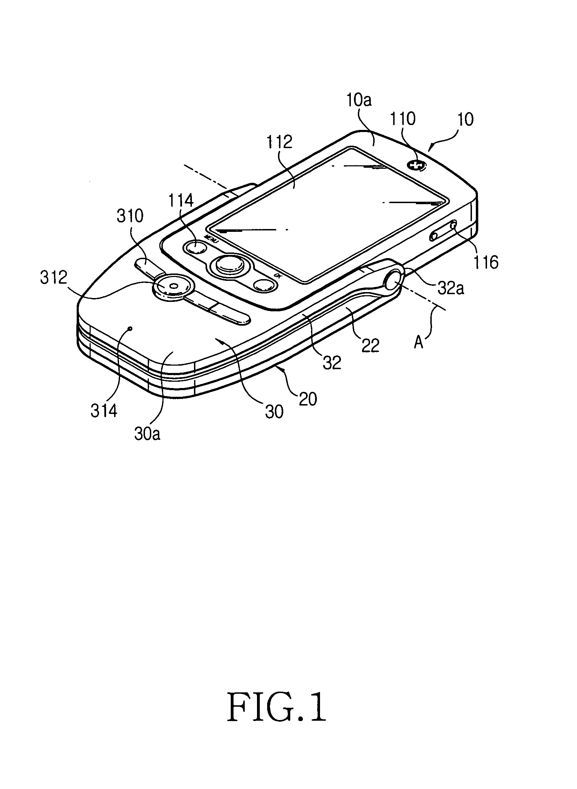

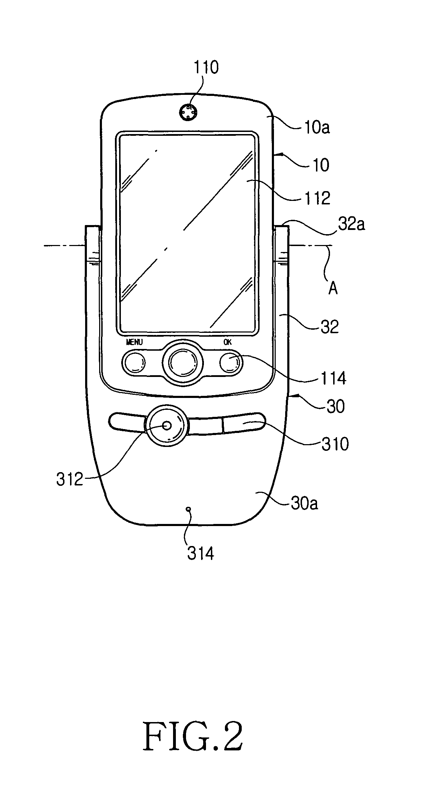

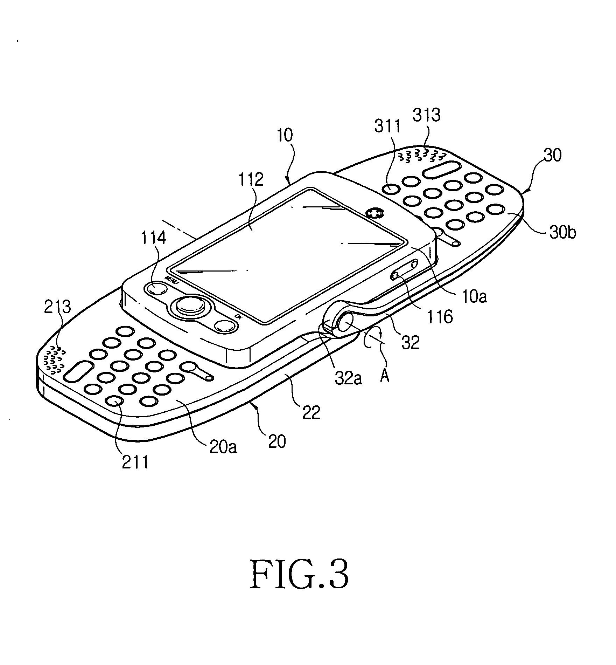

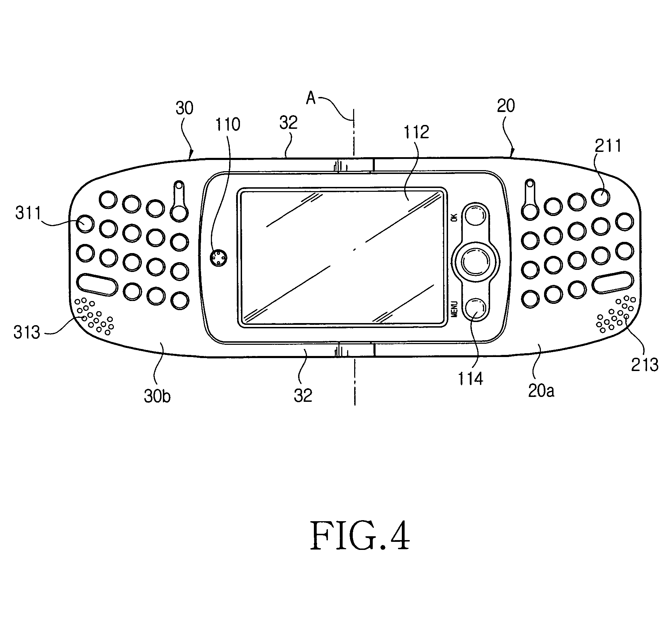

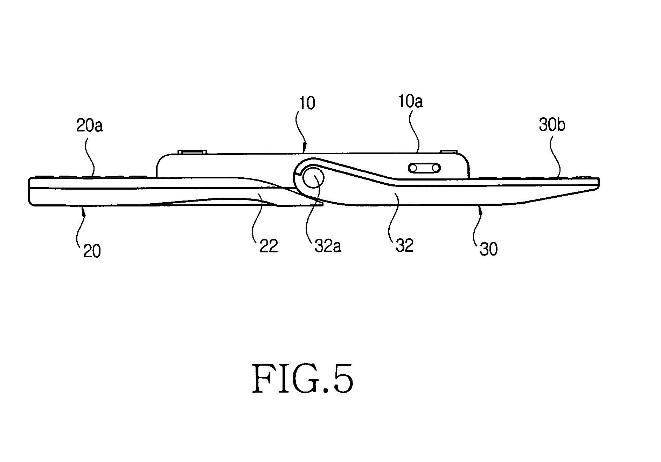

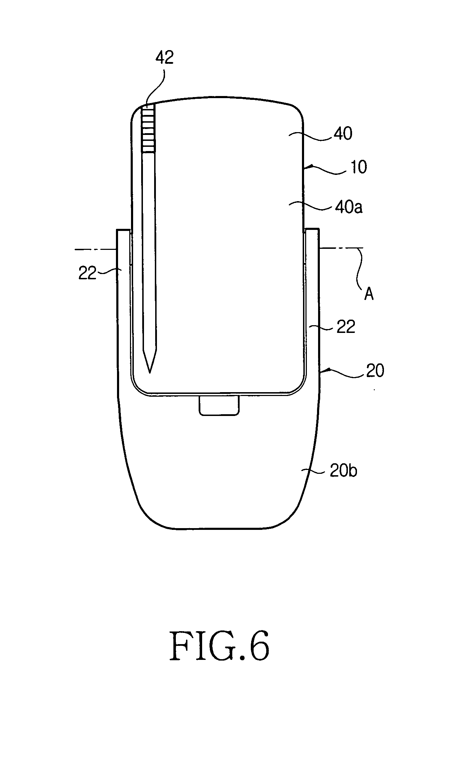

As shown in FIGs. 1 to 6, a portable communication apparatus (hereinafter, referred to as a "communication apparatus") having data input expandability according to a preferred embodiment of the present invention comprises a main housing 10, a fixed housing 20 integrally provided to the main housing 10, and a rotational housing 30 connected to the main housing 10 to be rotatable in a direction of going toward or away from the fixed housing 20. The communication apparatus is a portable apparatus in which both a phone operation mode and a personal digital assistant (PDA) operation mode are compatible. These operation modes are switched according to whether the rotational housing 30 is opened or closed.
To be specific, the communication apparatus is preferably used in a phone operation mode while the rotational housing 30 is closed on the fixed housing 20, and it is used in a PDA operation mode while the rotational housing 30 is opened from the fixed housing 20. FIGs. 1 and 2 show the communication apparatus used in the phone operation mode, while FIGs. 3 and 4 show the communication apparatus used in the PDA operation mode. To this end, the communication apparatus is designed so that two similar-shaped housings, i.e., the fixed housing 20 and the rotational housing 30 are connected to the main housing 10. In particular, the fixed housing 20 is fixed to the main housing 10_while surrounding a peripheral portion of the main housing 10, the rotational housing 30 is connected to the main housing 10 to be rotatable about a hinge axis A in a direction of going toward or away from the fixed housing 20.
The hinge axis A passes through the main housing 10. To be more specific, the hinge axis A extends across the main housing 10 (in a direction from right to left, and vice versa, in FIG. 2), and in particular passes through the middle of a display 112 mounted on the upper surface of the main housing 10. Hinge modules are each arranged in the main housing 10 on both opposite sides of the display 112. Of two hinge modules, one functions as a driving hinge module, being mounted on one side of the display 112, while the other functions as an idle hinge module or hinge dummy, being mounted on the other side of the display 112.
A first peripheral portion of the main housing 10 is surrounded by the fixed housing 20, while a second peripheral portion is opened. However, when the rotational housing 30 is completely opened from the fixed housing 20 by 180°, the whole peripheral portion the main housing 10 is fully surrounded by the fixed and rotational housings 20 and 30. The main housing 10 has an upper surface 10a, provided with a first speaker device 110, a display 112 and one or more first keys 114 in sequence. Further, the main housing 10 has one side provided with a plurality of second keys 116. The display 112 is constructed for representing information and/or for inputting information.
The fixed housing 20 surrounds the first peripheral portion of the main housing 10, particularly approximately half of the whole peripheral portion of the main housing 10, and includes an upper surface 20a and a lower surface 20b (shown in FIG. 6). The fixed housing 20 includes a fixed body having upper and lower surfaces 20a and 20b and a pair of legs 22 extending from both comers of the fixed body 20 in the same direction. The upper surface 20a of the fixed housing 20 is provided with a second speaker device 213 and one or more of third keys 211. The third keys 211 are used to input various numerals or characters. The pair of legs 22 have ends which are positioned under the hinge axis A and mounted nearest to ends of the pair of legs 32 of the rotational housing 30.
The rotational housing 30 rotates about the hinge axis A provided on the main housing 10 in a direction moving toward or away from the fixed housing 20. When the rotational housing 30 is closed on the fixed housing 20, the rotational housing 30 surrounds the first peripheral portion of the main housing 10. When the rotational housing 30 is opened from the fixed housing 20, the rotational housing 30 surrounds the second peripheral portion of the main housing 10. This is because the rotational housing 30 has an opening taking a specific shape. The opening refers to a space between the pair of legs 32. A detailed description will be made below regarding a construction of the rotational housing 30.
As shown in FIG. 3, the rotational housing 30 includes a rotational body and a pair of legs 32 extending from both corners of the rotational body in one direction. The body of the rotational housing 30 includes an upper surface 30a (shown in FIG. 1), a lower surface 30b and a central portion. The pair of legs 32 each include an end 32a with a curved portion. When the rotational housing 30 is closed on the fixed housing 20, the lower surface 30b of the rotational housing 30 faces the upper surface 20a of the main housing 10. When the rotational housing 30 is opened from the fixed housing 20, the rotational housing 30 rotates about the hinge axis A to the most remote position from the fixed housing 20, while the rotational housing 30 surrounds the second peripheral portion of the main housing 10.
As shown in FIG. 1, the upper surface 30a of the rotational housing 30 is provided with a camera lens 312, a plurality of fourth keys 310 and a microphone 314. As shown in FIGs. 3 and 4, the lower surface 30b of the rotational housing 30 is provided with a third speaker device 313 and a plurality of fifth keys 311. Each of the ends 32a of the pair of legs 32 has a curved portion, which has been previously mentioned. The curved portion of the end 32a is provided to allow the rotational housing 30 to rotate smoothly while the rotational housing 30 rotates about the hinge axis A. The hinge axis A passes through a rotational center of the end 32a.
As shown in FIG. 5, when the rotational housing 30 rotates about the hinge axis A to be completely opened from the fixed housing 20, the upper surface 10a of the main housing 10 protrudes above the fixed and rotational housings 20 and 30, and the upper surface 20a of the fixed housing 20 is flush with the lower surface 30b of the rotational housing 30.
As shown in FIG. 1, the communication apparatus is designed so that, when the rotational housing 30 is closed on the fixed housing 20, the plurality of fourth keys 310, the camera lens 312 and the microphone 314, which are provided on the upper surface 30a of the rotational housing 30, are exposed outside, and also the first speaker device 110, display 112 and a plurality of first keys 114, which are provided on the upper surface 10a of the main housing 10, are exposed outside. These exposed components can be in an available situation for a user of the apparatus.
As shown in FIG. 3, the communication apparatus is designed so that, when the rotational housing 30 is completely opened, away from the fixed housing 20, the plurality of third and fifth keys 211 and 311 of the fixed and rotational housings 20 and 30 are exposed to be available for use. Additionally, the first speaker device 110, display 112 and the plurality of first keys 114, which are provided on the upper surface 10a of the main housing 10, can be used.
As shown in FIG. 6, the communication apparatus has a bottom provided with a battery pack 40. The battery pack 40 is provided with a stylus 42, which is inserted or withdrawn in the longitudinal direction to the battery pack for its use.
While the invention has been shown and described with reference to certain preferred embodiments thereof, it will be understood by one skilled in the art that various modifications may be made therein without departing from the scope of the invention as defined by the appended claims.
As can be seen from the foregoing, the present invention can accomplish data input expandability by providing data input units in the main housing, fixed housing and rotational housing. Further, the present invention can operate with a multimedia environment.

## Claims

1. A portable communication apparatus, comprising:
a) a main housing;
b) a hinge axis extending across the main housing;
c) a fixed housing affixed to a first peripheral portion of the main housing, the first peripheral portion being located at one side of the hinge axis; and
d) a rotational housing rotatable about the hinge axis, the rotational housing being in contact with the fixed housing while surrounding the first peripheral portion of the main housing when the rotational housing is closed on the fixed housing, the rotational housing being most distant from the fixed housing while surrounding a second peripheral portion of the main housing when the rotational housing is completely opened from the fixed housing.

2. The portable communication apparatus according to claim 1, wherein the main housing has an upper surface provided with a first speaker device, a display and a plurality of first keys, and has a lateral surface provided with at least one second key.

3. The portable communication apparatus according to claim 1 or 2, wherein the fixed housing has an upper surface provided with a second speaker device and at least one third key.

4. The portable communication apparatus according to one of claims 1 to 3, wherein the rotational housing has an upper surface provided with a camera lens and at least one fourth key, and has a lower surface provided with a third speaker device and at least one fifth key.

5. The portable communication apparatus according to one of claims 1 to 4, wherein the fixed housing comprises a fixed body and a pair of legs extending from at least two comers of the fixed body in one direction.

6. The portable communication apparatus according to one of claims 1 to 5, wherein the rotational housing comprises a rotational body and a pair of legs extending from at least two comers of the rotational body in one direction, the pair of legs having an opening formed between them so as to accommodate the main housing, each of the legs having a curved portion.

7. The portable communication apparatus according to claim 2, wherein the display is constructed as one unit for representing and inputting information.

8. The portable communication apparatus according to claim 2, wherein the display has a center through which the hinge axis passes.

## Amended claims

### Amended claims in accordance with Rule 86(2) EPC.

**6.** A portable communication apparatus according to claim 1, wherein the rotational housing comprises a rotational body;
a pair of legs extending from at least two corners of the rotational body in one direction, the pair of legs having an opening formed between them so as to accommodate the main housing, each of the legs having a curved portion; and
a curved portion formed in the pair of legs, respectively wherein the lower surface of the fixed housing is formed on the same line as the lower surface of the rotational housing so that a user can conveniently input data.
